# EUROPÄISCHE PATENTSCHRIFT

(11) **EP 4 006 398 B1**
(45) Veröffentlichungstag und Bekanntmachung des Hinweises auf die Patenterteilung: **29.05.2024**
(21) Anmeldenummer: 21209745.5
(22) Anmeldetag: 23.11.2021
(51) Int. Cl.: F16L 7/00

(54) **ABSTANDSHALTER FÜR ROHRE**
SPACER FOR PIPES
ESPACEUR POUR TUYAUX

(30) Priorität: 27.11.2020 DE 102020131501
(43) Veröffentlichungstag der Anmeldung: 01.06.2022
(73) Patentinhaber: Baumann, Robert, 88239 Wangen (DE)
(72) Erfinder: Baumann, Robert, 88239 Wangen (DE)
(74) Vertreter: Patentanwälte und Rechtsanwalt Weiß, Arat & Partner mbB

(56) Entgegenhaltungen:
- EP-B1- 1 620 669
- US-A- 5 803 127
- US-B2- 8 651 146

## Beschreibung

### Technisches Gebiet

Die Erfindung betrifft einen Abstandshalter für Rohre nach dem Oberbegriff des Anspruchs 1.

### Stand der Technik

Abstandshalter für Rohre sind bereits in vielfältiger Form und Ausgestaltung bekannt und gebräuchlich. Meist handelt es sich dabei um Vorrichtungen die nach dem Vorbild einer kreisrunden Schelle um das zu beanstandende Rohr angeordnet werden. So wird beispielsweise in der DE 197 25 757 C1 ein Abstandshalter für ein medienführendes Rohr zur Verlegung des Rohres in einem Schutzrohr offenbart. In der US 5 803 1 27 A wird ein Rohrleitungssystem für den Transport von toxischen und gefährlichen Gasen offenbart, wobei eine Innere Leitung von einer äußeren Leitung mit einem Abstandshalter getrennt wird, so dass Spülgase zwischen den Leitungen fließen können.

In der US 8 651 146 B2 wird ein spiralförmiger Kabelabstandshalter offenbart, wobei mehrere wendelförmige Segmente 202a durch eine Brücke 204 miteinander verbunden sind. Diese Brücken 204 beabstanden die Segmente 202a und erlauben es einer Leitung "C" Wärme zwischen den Segmenten 202a abzustrahlen.

In der EP 1 620 669 B1 wird schließlich noch eine thermisch isolierende Rohrleitung offenbart, welche eine Abstandsanordnung 10 mit einem thermischen Isolierstreifen 18 aufweist.

### Aufgabe der Erfindung

Die Aufgabe der vorliegenden Erfindung ist es, die Nachteile aus dem Stand der Technik zu überwinden. Insbesondere soll eine Vorrichtung bereitgestellt werden, die es erlaubt ein Rohr auf einfache Weise in seiner Bettung zu dem umgebenden Medium zu beabstanden. Dabei soll die Vorrichtung leicht und kostengünstig sein. Weiterhin soll es möglich sein die Vorrichtung auch nach der Bettung des Rohres in vorgesehener Weise anzuordnen. Ferner sollen zur Installation der Vorrichtung keine Werkzeuge notwendig sein und die Vorrichtung soll aus möglichst wenigen Bestandteilen bestehen, vorzüglich einstückig sein.

### Lösung der Aufgabe

Zur Lösung der Aufgabe führen die Merkmale nach dem Anspruch 1. Vorteilhafte Ausgestaltungen sind in den Unteransprüchen beschrieben.

Der erfindungsgemässe Abstandshalter ist im Bereich einer Spiralauflage spiralfederförmig ausgebildet, wobei die Spiralauflage eineinhalb Ringwindungen aufweist. Natürlich können auch mehre Windungen vorgesehen sein.

An beiden Enden der Spiralauflage ist jeweils ein Rohauflageelement angeordnet, welches insbesondere durch seine jeweilig konkav gewölbte Aufnahme optimal dazu geeignet ist auf ein Rohr, beispielsweise ein Abflussrohr, aufgelegt zu werden und auch fest angeordnet werden kann.

Die Spiralauflage besteht ihrerseits aus einer ersten Ringhälfte, einer zweiten Ringhälfte und einer dritten Ringhälfte. Diese drei identisch ausgebildeten Ringhälften bilden zusammen als Spiralauflage eineinhalb Ringwindungen.

Dabei ist die erste Ringhälfte einends über eine Winkelverbindung mit dem ersten Rohrauflageelement und andernends über eine Ringhälftenverbindungen mit der zweiten Ringhälfte verbunden.

Weiterhin ist die zweite Ringhälfte einends über eine weitere Winkelverbindung mit dem zweiten Rohrauflageelement und andernends über eine weitere Ringhälftenverbindungen mit der zweiten Ringhälfte verbunden ist.

Die Winkelverbindungen sind dabei derart ausgebildet, dass sie sich von einer Aussenseite, welche die Seite des erfindungsgemässen Abstandshalters ist die dem zu beabstandenden Medium zugewandt ist, in Richtung einer Innenseite, welche die Seite ist, die dem Rohr zugewandt ist, und in axialer Richtung verbreitern.

Dadurch liegt ein Winkel zwischen den Rohrauflageelementen und den Ringhälften der Spiralauflage von 40 bis 50 Grad, vorzugsweise einem Winkel von 45 Grad vor.

Ebenso verhält es sich mit den beiden Ringhälftenverbindungen, welches die Rohrauflageelemente mit den Ringhälften verbinden und sich ebenfalls von der Aussenseite in Richtung der Innenseite verbreitern, so dass zwischen den Rohrauflageelementen mit den Ringhälften ebenfalls ein Winkel von 40 bis 50 Grad, vorzugsweise in einem Winkel von 45 Grad vorliegt.

Durch diese gewinkelte Anordnung wird auf vorteilhafte Weise erreicht, dass eine vergleichsweise große Fläche des zu beabstandenden Rohres zu dem Medium beabstandet werden kann.

Neben der Auflage umfassen die Rohraulfageelemente eine Kabelbinderaufnahme. Diese Kabelbinderaufnahme ist kanalförmig ausgebildet und erlaubt es, dass eine Fixierung der Rohrauflageelemente an einem Rohr mittels eines geeigneten Kabelbinders zuverlässig erfolgen kann. Dabei ist die Kabelbinderaufnahme zweistufig ausgebildet, so dass eine verrutschsichere Aufnahme von Kabelbindern in unterschiedlichen Größen ermöglicht wird.

Der erfindungsgemässe Abstandshalter besteht vorzugsweise aus einem geeigneten Kunststoff oder einer geeigneten Kunststoffmischung. Dabei ist vorgesehen, dass der Kunststoff derartige Eigenschaften aufweist die das Anordnen der Rohrauflageelemente an einem Rohr mittels Kabelbindern im Bereich der Kabelbinderaufnahme erlaubt und darüber hinaus eine genügende Flexibilität der Spiralauflage gewährleistet, so dass ein Aufsetzen des erfindungsgemässen Abstandshalters auf ein Rohr direkt an der vorgesehenen Position möglich ist, und es nicht von einem Ende des Rohres aufgeschoben werden muss.

In einem weiteren Ausführungsbeispiel besteht die Spiralauflage aus einem flexiblen Band. Dieses flexible Band weist zur Auflage auf einem Rohr, also rohrseitig, in regelmäßigen Abständen Abstandsfedern auf. Diese Abstandsfedern liegen auf einer Oberfläche eines Rohres auf und beanstanden, gehalten durch das flexible Band, das Rohr zu dem zu beabstandenden Medium.

Dieses Ausführungsbeispiel mit der als flexiblem Band ausgebildeten Spiralauflage weist weitere Vorteile in der Handhabung auf. Der erfindungsgemässe Abstandshalter, der mit einem flexiblen Band als Spiralauflage ausgestattet ist, kann bei unterschiedlichen Rohrdurchmessern angewendet werden. Dabei ändert sich, je nach Rohrdurchmesser, lediglich die Anzahl der Windungen. Bei geringen Rohrdurchmessern wird das flexible Band mehrfach um das Rohr gelegt, bei hohen Rohrdurchmessern nimmt die Anzahl der Windungen entsprechend ab. Wesentlich ist nur, dass mindestens eine Windung vollendet werden kann. Dadurch müssen nicht unterschiedliche Abstandshalter mitgebracht werden, wenn unklar ist, welche Rohre mit welchen Rohrdurchmessern zu beabstanden sind.

Weiterhin haben die in regelmäßigen Abständen an dem flexiblen Band angeordneten Federn eine puffernde Funktion in Richtung des zu beanstandenden Mediums. Zudem kann über die Länge der Federn der Abstand zwischen dem flexiblen Band und dem Rohr genau bestimmt und festgelegt werden.

Eine als flexibles Band mit Federn ausgeführte Spiralauflage kann daher dann angewendet werden, wenn die Durchmesser der zu beabstandenden Rohre nicht bekannt sind, oder keine passenden anderen Abstandshalter vorfügbar sind.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine dreidimensionale Draufsicht auf einen erfindungsgemässen Abstandshalter 1;
- Figur 2: eine geschnittene Teilansicht des erfindungsgemässen Abstandshalters 1 entlang einer Schnittlinie A;
- Figur 3: eine dreidimensionale Seitenansicht auf einen erfindungsgemässen Abstandshalter 1.

### Ausführungsbeispiel

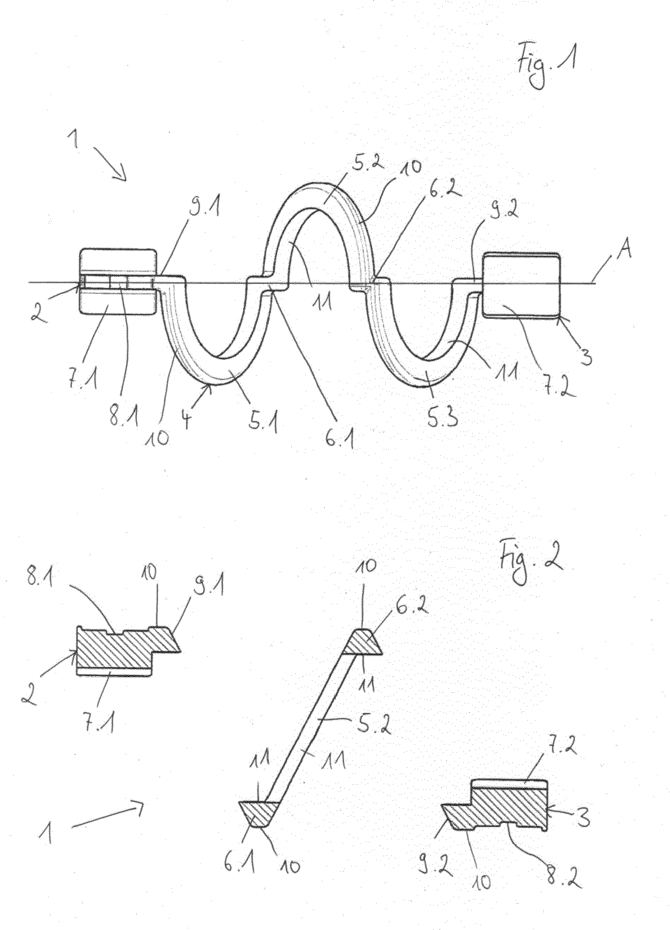

In Figur 1 ist ein erfindungsgemässer Abstandshalter 1 dargestellt. Im Bereich einer Spiralauflage 4 ist dieser spiralfederförmig ausgebildet, wobei in die Spiralauflage 4 eineinhalb Ringwindungen aufweist.

An beiden Enden der Spiralauflage 4 ist jeweils ein Rohrauflageelement 2, 3 angeordnet, also einends ein erstes Rohrauflageelement 2 und andernends ein zweites Rohrauflageelement 3. Das erste Rohraufnahmeelement 2 ist über eine erste Winkelverbindung 9.1 der Spiralauflage 4 verbunden. Das zweite Rohraufnahmeelement 3 ist andernends über eine zweite Winkelverbindung 9.2 mit der Spiralauflage 4 verbunden.

Die Spiralauflage 4 besteht aus einer ersten Ringhälfte 5.1, einer zweiten Ringhälfte 5.2 und einer dritten Ringhälfte 5.3. Diese drei identisch ausgebildeten Ringhälften 5.1, 5.2, 5.3 bilden zusammen eineinhalb Ringwindungen.

Die erste Ringhälfte 5.1 und die dritte Ringhälfte 5.3 sind jeweils einends mit der zwischen ihnen angeordneten zweiten Ringhälfte 5.2 über jeweils eine Ringhälftenverbindung 6.1, 6.2 verbunden. Die Ringhälftenverbindungen 6.1 und 6.2 sind derart ausgebildet, dass sie sich von einer Aussenseite 10 der Ringhälften 5.1, 5.2, 5.3 in Richtung einer Innenseite 11 der Ringhälften 5.1, 5.2, 5.3 in tangentialer Richtung verbreitern.

Dies führt dazu, dass die Ringhälften 5.1, 5.2, 5.3 in einem Winkel von 40 bis 50 Grad, bevorzugt in einem Winkel von 45 Grad, zueinander angewinkelt verbunden sind.

Mit der Aussenseite 10 ist die Seite gemeint, die von einem Rohr abgewandt ist und mit dem zu beabstandenden Medium in Kontakt kommt. Mit der Innenseite 11 ist die Seite gemeint, die in Kontakt mit dem Rohr kommt.

In Figur 2 ist eine geschnittene Teilansicht des erfindungsgemässen Abstandshalters 1 entlang einer Schnittlinie A aus Figur 1 dargestellt.

Ersichtlich sind das erste Rohrauflageelement 2, das zweite Rohauflageelement 3 und die zweite Ringhälfte 5.2 mit den beiden Ringhälftenverbindungen 6.1 und 6.2.

Die beiden identisch ausgebildeten Rohrauflageelemente 2 und 3 weisen auf der Aussenseite 10 eine Kabelbinderaufnahme 8.1, 8.2 auf. Die Kabelbinderaufnahme 8.1, 8.2 ist in vorliegenden Ausführungsbeispiel als ein zweistufiger Kanal in das Rohrauflageelement 2,3 eingelassen. Die Kabelbinderaufnahme 8.1, 8.2 verläuft, bei vorgesehener Anordnung des Abstandshalters an einem Rohr, tangential zu einem zu beabstandenden Rohr. Die Zweistufigkeit der Kabelbinderaufnahme 8.1, 8.2 ermöglicht in vorliegendem Ausführungsbeispiel eine verrutschsichere Anordnung unterschiedlich breiter Kabelbinder.

Weiterhin ist ersichtlich, dass das Rohrauflageelemente 2, 3 gegenüber der Kabelbinderaufnahme 8.1, 8.2 eine konkav in Richtung einer Aussenseite 10 gewölbte Auflage 7.1, 7.2 umfasst. Die gewölbte Auflage 7.1, 7.2 ist daher an der Innenseite 11 angeordnet und erlaubt insbesondre durch die konkave Wölbung eine optimale Auflage auf einem zu beabstandenden Rohr.

Ferner umfasst das Rohrauflageelemente 2, 3 eine Winkelverbindung 9.1, 9.2. In Figur 2 ist gut ersichtlich, dass die Winkelverbindung 9.1, 9.2 sich von der Aussenseite 10 in Richtung der Innenseite 11 und in axialer Richtung, also in Richtung der Schnittlinie A, verbreitert. Dies führt ebenso wie bei den Ringhälftenverbindungen 6.1 und 6.2 dazu, dass die abbildungsbedingt in Figur 2 nicht abgebildeten Ringhälften 5.1 und 5.3 ebenfalls in einem Winkel von 40 bis 50 Grad, bevorzugt in einem Winkel von 45 Grad, zu dem ersten bzw. zweite Rohrauflageelement 2, 3 angewinkelt verbunden sind.

Auch ist die Ringhälfte 5.1 mit Blick auf die Innenseite 11 ersichtlich. Diese ist einends mit der Ringhälftenverbindung 6.1 und andernends mit der Ringhälftenverbindung 6.2 verbunden. Über die Ringhälftenverbindungen 6.1 und 6.2 ist die Ringhälfte 5.2 mit den anderen beiden Ringhälften 5.1 und 5.3 verbunden. Auch hier ist ersichtlich, dass sich die Ringhälftenverbindungen 6.1 und 6.2 von der Aussenseite 10 in Richtung der Innenseite 11 verbreitern, so dass die Ringhälften 5.1, 5.2, 5.3 in einem Winkel von 40 bis 50 Grad zueinander, bevorzugt in einem Winkel von 45 Grad zueinander, verbunden sind.

In dieser geschnittenen Ansicht sind die beiden Ringhälften 5.1 und 5.3 abbildungsbeding nicht ersichtlich.

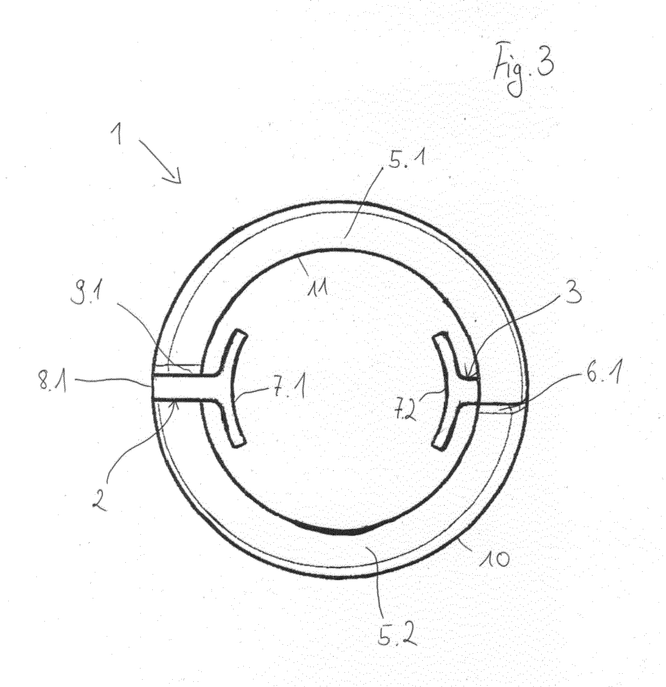

In Figur 3 ist eine seitliche Ansicht auf den erfindungsgemässen Abstandshalter 1 ersichtlich, wobei der Blick in axialer Richtung durch die Windungen der Spiralauflage 4 verläuft.

In dieser Ansicht ist insbesondre die Ausformung der beiden Rohrauflageelemente 2 und 3 ersichtlich, wobei die konkav zur Innenseite 11 gewölbten Auflagen 7.1 und 7.2 ersichtlich sind.

Bezugnehmend auf die Figuren 1 bis 3 erklärt sich die Funktionsweise der erfindungsgemässen Vorrichtung folgendermassen:
Der erfindungsgemässe Abstandshalter 1 wird um ein zu beabstandenden Rohr gelegt, wobei dies durch flexible Materialeigenschaften des erfindungsgemässen Abstandshalters 1 durch einfaches Aufstecken an der gewünschten Position des Rohres möglich ist. Ein Aufschieben aus axialer Richtung von einem Ende eines Rohres, wie es beispielsweise bei den meisten Systemen die auf einem starren Ring basieren erfolgt, ist daher nicht notwendig. Der erfindungsgemässe Abstandshalter 1 kann danke seiner Flexibilität einfach an der gewünschten Position auf ein Rohr aufgesetzt werden, so dass es dieses umfasst.

Ist der erfindungsgemässe Abstandshalter 1 an der vorgesehenen Position um ein Rohr platziert, wird dieser durch übliche Kabelbinder dort angeordnet. Dazu wird ein erster Kabelbinder um das Rohr und das erste Rohrauflageelement 2 im Bereich der Kabelbinderaufnahme 8.1 gelegt und festgezogen.

Danach wird das zweite Rohrauflageelement 3 in axialer Richtung entlang des Rohres von dem ersten Rohrauflageelement 2, welches ja bereits an dem Rohr fixiert wurde, beabstandet bis die Ringhälftenverbindungen 6.1 und 6.2 an Ihrer Innenseite 11 Kontakt zu dem Rohr haben. Sobald dieser Kontakt gegeben ist, ist die Position gefunden, an der das zweite Rohrauflageelement 3 ebenfalls mit einem Kabelbinder im Bereich der Kabelbinderaufnahme 8.2 an dem Rohr festgelegt wird.

Obwohl nur ein bevorzugtes Ausführungsbeispiel der Erfindung beschrieben und dargestellt wurde, ist es offensichtlich, dass der Fachmann zahlreiche Modifikationen hinzufügen kann. Insbesondere kann vorgesehen sein, dass die Anzahl der umfassten Ringhälften 5 bei mehr als drei liegen kann. Dadurch würde die axiale Länge des Abstandshalters verlängert, falls dies notwendig ist. Natürlich kann dabei auch der Winkel, welcher durch die Ringhälftenverbindungen 6.1, und 6.2 sowie die Winkelverbindungen 9.1 und 9.2 variieren.

### Bezugszeichenliste

| | |
|---|---|
| 1 | Abstandshalter |
| 2 | erstes Rohrauflageelement |
| 3 | Zweites Rohrauflageelement |
| 4 | Spiralauflage |
| 5.1, 5.2, 5.3 | Ringhälfte |
| 6.1, 6.2 | Ringhälftenverbindung |
| 7.1, 7.2 | Auflage |
| 8.1, 8.2 | Kabelbinderaufnahme |
| 9.1, 9.2 | Winkelverbindung |
| 10 | Innenseite |
| 11 | Aussenseite |
| 12 | |
| 13 | |
| 14 | |
| 15 | |
| 16 | |
| 17 | |
| 18 | |
| 19 | |
| A | Schnittlinie |

## Patentansprüche

1. Abstandshalter für Rohre, wobei ein erstes Rohrauflageelement (2) über eine Spiralauflage (4) mit einem zweiten Rohrauflageelement (3) einstückig verbunden ist, wobei die Spiralauflage (4) eine erste Ringhälfte (5.1), eine zweite Ringhälfte (5.2) und eine dritte Ringhälfte (5.3) aufweist, wobei die erste Ringhälfte (5.1) einends über eine Winkelverbindung (9.1) mit dem ersten Rohrauflageelement (2) und andernends über eine Ringhälftenverbindung (6.1) mit der zweiten Ringhälfte (5.2) verbunden ist und die dritte Ringhälfte (5.3) einends über eine Winkelverbindung (9.2) mit dem zweiten Rohrauflageelement (3) und andernends über eine Ringhälftenverbindung (6.2) mit der zweiten Ringhälfte (5.2) verbunden ist,
**dadurch gekennzeichnet, dass** H
die Winkelverbindungen (9.1, 9.2) sich von einer Aussenseite (10) in Richtung einer Innenseite (11) und in axialer Richtung verbreitern.

2. Abstandshalter nach Anspruch 1, **dadurch gekennzeichnet, dass** sich die Ringhälftenverbindungen (6.1, 6.2) von der Aussenseite (10) in Richtung der Innenseite (11) verbreitern, wobei die Ringhälften (5.1, 5.2, 5.3) in einem Winkel von 40 bis 50 Grad zueinander, bevorzugt in einem Winkel von 45 Grad zueinander, verbunden sind.

3. Abstandshalter nach Anspruch 1, **dadurch gekennzeichnet, dass** das erste und das zweite Rohrauflageelement (2, 3) eine Auflage (7.1, 7.2) und eine Kabelbinderaufnahme (8.1, 8.2) umfassen.

4. Abstandshalter nach Anspruch 3 **dadurch gekennzeichnet, dass** die Kabelbinderaufnahme (8.1, 8.2) zweistufig ausgebildet ist.

5. Abstandshalter nach Anspruch 3 **dadurch gekennzeichnet, dass** die Auflage (7.1, 7.2) in Richtung der Aussenseite (10) konkav gewölbt ist.

6. Abstandshalter nach Anspruch 1 **dadurch gekennzeichnet, dass** die Spiralauflage (4) und/oder die Rohrauflageelemente (2, 3) aus einem flexiblem Kunststoff besteht.

7. Abstandshalter nach Anspruch 1 **dadurch gekennzeichnet, dass** die Spiralauflage (4) aus einem flexiblen Band besteht, welches zur Auflage auf einem Rohr rohrseitg in regelmäßigen Abständen Abstandsfedern aufweist.

## Claims

1. Spacer for pipes, wherein a first pipe support element (2) is connected in one piece to a second pipe support element (3) via a spiral support (4), wherein the spiral support (4) has a first ring half (5.1), a second ring half (5.2) and a third ring half (5.3), wherein the first ring half (5.1) is connected at one end to the first pipe support element (2) via an angled connection (9.1) and at the other end to the second ring half (5.2) via an ring half connection (6.1) and the third ring half (5.3) is connected at one end to the second pipe support element (3) via an angled connection (9.2) and at the other end to the second ring half (5.2) via a ring half connection (6.2),
**characterized in that**
the angled connections (9.1, 9.2) widen from an outer side (10) in the direction of an inner side (11) and in the axial direction.

2. Spacer according to claim 1, **characterized in that** the ring half connections (6.1, 6.2) widen from the outer side (10) in the direction of the inner side (11), wherein the ring halves (5.1, 5.2, 5.3) are connected at an angle of 40 to 50 degrees to one another, preferably at an angle of 45 degrees to one another.

3. Spacer according to claim 1, **characterized in that** the first and second pipe support elements (2, 3) comprise a support (7.1, 7.2) and a cable tie receptacle (8.1, 8.2).

4. Spacer according to claim 3, **characterized in that** the cable tie receptacle (8.1, 8.2) is designed in two stages.

5. Spacer according to claim 3 **characterized in that** the support (7.1, 7.2) is concavely curved towards the outside (10).

6. Spacer according to claim 1, **characterized in that** the spiral support (4) and/or the pipe support elements (2, 3) consist of a flexible plastic.

7. Spacer according to claim 1 **characterized in that** the spiral support (4) consists of a flexible strip which has spacer springs at regular intervals for support on a pipe on the pipe side.

## Revendications

1. Espaceur pour tubes, dans lequel un premier élément d'appui de tube (2) est relié d'un seul tenant à un second élément d'appui de tube (3) par l'intermédiaire d'un appui en spirale (4), dans lequel l'appui en spirale (4) présente une première moitié annulaire (5.1), une deuxième moitié annulaire (5.2) et une troisième moitié annulaire (5.3), dans lequel la première moitié annulaire (5.1) est reliée, au niveau d'une extrémité, au premier élément d'appui de tube (2) par l'intermédiaire d'une liaison angulaire (9.1) et est reliée, au niveau d'une autre extrémité, à la deuxième moitié annulaire (5.2) par l'intermédiaire d'une liaison de moitiés annulaires (6.1), et la troisième moitié annulaire (5.3) est reliée, au niveau d'une extrémité, au second élément d'appui de tube (3) par l'intermédiaire d'une liaison angulaire (9.2) et est reliée, au niveau d'une autre extrémité, à la deuxième moitié annulaire (5.2) par l'intermédiaire d'une liaison de moitiés annulaires (6.2),
**caractérisé en ce que**
les liaisons angulaires (9.1, 9.2) s'élargissent depuis un côté extérieur (10) en direction d'un côté intérieur (11) et dans une direction axiale.

2. Espaceur selon la revendication 1, **caractérisé en ce que** les liaisons de moitiés annulaires (6.1, 6.2) s'élargissent depuis le côté extérieur (10) en direction du côté intérieur (11), dans lequel les moitiés annulaires (5.1, 5.2, 5.3) sont reliées entre elles selon un angle allant de 40 à 50 degrés, de préférence selon un angle de 45 degrés.

3. Espaceur selon la revendication 1, **caractérisé en ce que** le premier et le second élément d'appui de tube (2, 3) comprennent un appui (7.1, 7.2) et un logement pour serre-câble (8.1, 8.2).

4. Espaceur selon la revendication 3, **caractérisé en ce que** le logement pour serre-câble (8.1, 8.2) est réalisé en deux parties.

5. Espaceur selon la revendication 3, **caractérisé en ce que** l'appui (7.1, 7.2) est bombé de manière concave en direction du côté extérieur (10).

6. Espaceur selon la revendication 1, **caractérisé en ce que** l'appui en spirale (4) et/ou les éléments d'appui de tube (2, 3) sont constitués d'une matière plastique flexible.

7. Espaceur selon la revendication 1, **caractérisé en ce que** l'appui en spirale (4) est constitué d'une bande flexible qui, pour l'appui sur un tube, présente des ressorts d'espacement espacés à intervalles réguliers du côté du tube.
